# EUROPÄISCHE PATENTANMELDUNG

(11) **EP 0 997 179 A1**
(43) Veröffentlichungstag der Anmeldung: **03.05.2000**
(21) Anmeldenummer: 99810866.6
(22) Anmeldetag: 27.09.1999
(51) Int. Cl.: B01D 3/00, B01D 53/18

(54) **Flüssigkeitsverteiler für Kolonnenpackung**

(30) Priorität: 28.10.1998 EP 98811082
(71) Anmelder: Sulzer Chemtech AG, 8404 Winterthur (CH)
(72) Erfinder: Beutler, Beat, 8404 Winterthur (CH)
(74) Vertreter: Sulzer Management AG

(57) **Zusammenfassung**

Der Flüssigkeitsverteiler (1) für Kolonnenpackungen (9) ist zum Zuführen eines flüssigen Mediums (5) vorgesehen, das aus einem Stoff oder einem Stoffgemisch besteht und das zur Ausbildung von Inhomogenitäten neigt, beispielsweise aufgrund einer Entmischung oder einer Polymersation. Dieser Verteiler (1) umfasst mindestens ein Teilorgan (2) mit einer Reihe von Abgabestellen (20, 21, 22) für das flüssige Medium, wobei mindestens eine der Abgabestellen (20) bezüglich der Fliessrichtung (5') des Mediums eine letzte Position im Teilorgan einnimmt. Bei der oder den letzten Abgabestellen (20) ist ein Strömungsrichter (4) im oder am Teilorgan angeordnet, durch den ein Durchfluss des.Mediums in Bereichen bewirkbar ist, an denen ohne den Strömungsrichter eine Stagnation des Flusses vorläge.

## Beschreibung

Die Erfindung betrifft einen Flüssigkeitsverteiler für Kolonnenpackungen gemäss Oberbegriff von Anspruch 1 sowie Verwendungen des Flüssigkeitsverteilers.

Ein Flüssigkeitsverteiler umfasst Teilorgane mit Abgabestellen für das in der Kolonne zu behandelnde Medium. Solche Teilorgane sind Armkanäle, Hauptkanäle, Vorverteilkanäle oder Verteilerrohre. Die Abgabestellen sind Grundlöcher, laterale Löcher, Röhrchen und/oder Schlitze. Bei einem mehrstufigen Flüssigkeitsverteiler können die Abgabestellen auch die Übergangsstellen von einer Stufe zu einer nachfolgenden Stufe sein.

Aus der EP-B 0 118 029 ist eine Vorrichtung zur gravimetrischen Flüssigkeitsverteilung für Stoff- und Wärmetauschkolonnen bekannt, mit der ein flüssiges Medium einer Kolonnenpackung zugeführt wird. Die Lehre dieser Veröffentlichung betrifft eine gleichmässige Verteilung in Bezug auf ein Problem, das mit der Vorrichtung selbst zusammenhängt, nämlich eine praktisch unvermeidliche, in der Regel zwar geringe aber trotzdem nicht vernachlässigbare Schiefstellung des Verteilersystems. Eine gleichmässige Verteilung kann auch durch Eigenschaften des zu behandelnden Mediums beeinträchtigt werden. Dies ist der Fall, wenn das flüssige Medium aus einem Stoff oder einem Stoffgemisch besteht, das zur Ausbildung von Inhomogenitäten neigt. Solche Inhomogenitäten können durch Entmischung mehrphasiger Medien wie beispielsweise Emulsionen, durch Ablagerungen aus Suspensionen oder durch Polymerisation eines zu behandelnden Stoffs entstehen.

Es sind in erster Linie Ausbildungen von Inhomogenitäten an Stellen mit stagnierender Strömung zu erwarten. Der Verteiler umfasst mindestens ein Teilorgan mit einer Reihe von Abgabestellen für das flüssige Medium, wobei mindestens eine der Abgabestellen bezüglich der Fliessrichtung des Mediums eine letzte Position im Teilorgan einnimmt. Bei der oder den letzten Abgabestellen befinden sich Zonen mit stagnierender Strömung.

Es ist Aufgabe der Erfindung, einen Flüssigkeitsverteiler für Kolonnenpackungen zu schaffen, bei dem das genannte Problem mit einer Ausbildung von Inhomogenitäten entschärft ist. Diese Aufgabe wird durch den in Anspruch 1 definierten Verteiler gelöst, indem in die Teilorgane geeignet ausgebildete Strömungsrichter eingebaut werden.

Der Flüssigkeitsverteiler für Kolonnenpackungen ist zum Zuführen eines flüssigen Mediums vorgesehen, das aus einem Stoff oder einem Stoffgemisch besteht und das zur Ausbildung von Inhomogenitäten neigt, beispielsweise aufgrund einer Entmischung oder einer Polymersation. Dieser Verteiler umfasst mindestens ein Teilorgan mit einer Reihe von Abgabestellen für das flüssige Medium, wobei mindestens eine der Abgabestellen bezüglich der Fliessrichtung des Mediums eine letzte Position im Teilorgan einnimmt. Bei der oder den letzten Abgabestellen ist ein Strömungsrichter im oder am Teilorgan angeordnet, durch den ein Durchfluss des Mediums in Bereichen bewirkbar ist, an denen ohne den Strömungsrichter eine Stagnation des Flusses vorläge.

Dank dem Einsatz von erfindungsgemässen Strömungsrichtern wird das zu verteilende Medium in einen Bewegungszustand versetzt, in dem stagnierende Strömungszonen beseitigt sind.

Die abhängigen Ansprüche 2 bis 8 betreffen vorteilhafte Ausführungsformen des erfindungsgemässen Verteilers. Gegenstand der Ansprüche 9 und 10 ist die Verwendung des Verteilers in einer Packungskolonne.

Nachfolgend wird die Erfindung anhand der Zeichnungen erläutert. Es zeigen:
- Fig. 1: einen Flüssigkeitsverteiler über einer Kolonnenpackung,
- Fig. 2: einen Endbereich eines Verteilkanals mit einem erfindungsgemässen Strömungsrichter in Form einer Prallvorrichtung,
- Fig. 3: einen Verteilkanal mit einem zweiten Ausführungsbeispiel des Strömungsrichters,
- Fig. 4: einen Längsschnitt durch den Verteilkanal der Fig.3,
- Fig. 5: einen Verteilkanal mit aufsteckbarem Strömungsrichter und
- Fig. 6: einen Verteilkanal mit einem Strömungsrichter, der gleichzeitig eine Abgabestelle für die zu verteilende Flüssigkeit ist.

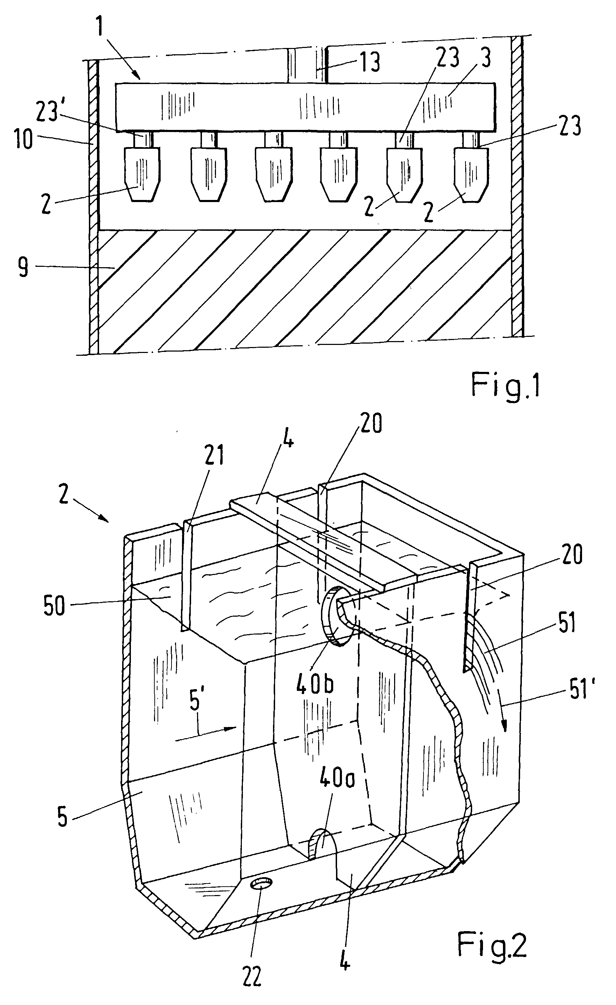

Fig. 1 zeigt ausschnittsweise eine Kolonne 10 mit einer Packung 9, über der ein zweistufiger Verteiler 1 angeordnet ist. Ein auf der Packung 9 zu behandelndes flüssiges Medium 5 wird dieser mittels einer Mehrzahl von Teilorganen 2 - siehe Fig. 2 - zugeführt. Das Medium 5 wird über ein Rohr 13, einen Vorverteiler 3 und Übergangsstellen 23 in die als Verteilkanäle ausgebildeten Teilorgane 2 eingespeist.

Das in Fig. 2 dargestellte Teilorgan 2 - mit zeichnerisch entfernter Seitenwand - ist ein gegen oben offener Verteilkanal; es weist Abgabestellen für das Medium 5 auf, die als Überlaufschlitze 20, 21 am oberen Kanalrand und als Grundlöcher 22 ausgebildet sind. Das Medium 5 weist ein Flüssigkeitsniveau 50 auf und fliesst in Richtung des Pfeils 5'. Das durch die Überlaufschlitze ausfliessende Medium 51 (Pfeil 51') fällt auf die nicht dargestellte Packung 9 (siehe Fig.1). Die Überlaufschlitze mit der Bezugsnummer 20 sind die letzten Abgabestellen. Dort weist die Bewegung des Mediums 5 die geringsten Strömungsgeschwindigkeiten auf. Ein als Prallvorrichtung ausgebildeter Strömungsrichter 4 sorgt für eine gerichtete Strömung, um eine Ausbildung von Inhomogenitäten des Mediums 5 zu unterdrücken. Diese Strömungsführung wird durch geeignet positionierte Durchbrüche in der Prallvorrichtung bewirkt, nämlich durch einen Engpass 40a, der am Grund des Teilorgans 2 angeordnet ist und durch einen Engpass 40b, der sich im Bereich des Flüssigkeitsniveaus 50 befindet. Engpässe 40 (40a und/oder 40b) des Strömungsrichters 4 können auch schlitzförmig sein oder eine andere geometrische Form haben. An den Kanten des Engpasses 40 wird die Strömung abgerissen und es entstehen Verwirbelungen. Befindet sich der Engpass 40 unter der Abgabestelle 20, so werden Verwirbelungen durch den Sog, der von unten nach oben wirkt, zusätzlich begünstigt, und es ergeben sich somit höhere Strömungsgeschwindigkeiten.

Der Strömungsrichter 4 kann an das Teilorgan 2 angeschweisst werden; oder er kann auf eine andere Art befestigt werden, beispielsweise geheftet, geklemmt oder geklebt. Er kann aus Edelstahl, Keramik, Kunststoff oder einem sonstigen Material gefertigt sein. Für die Aussengeometrie des Stömungsrichters 4 wählt man eine Form, die optimal in das Teilorgan 2 passt.

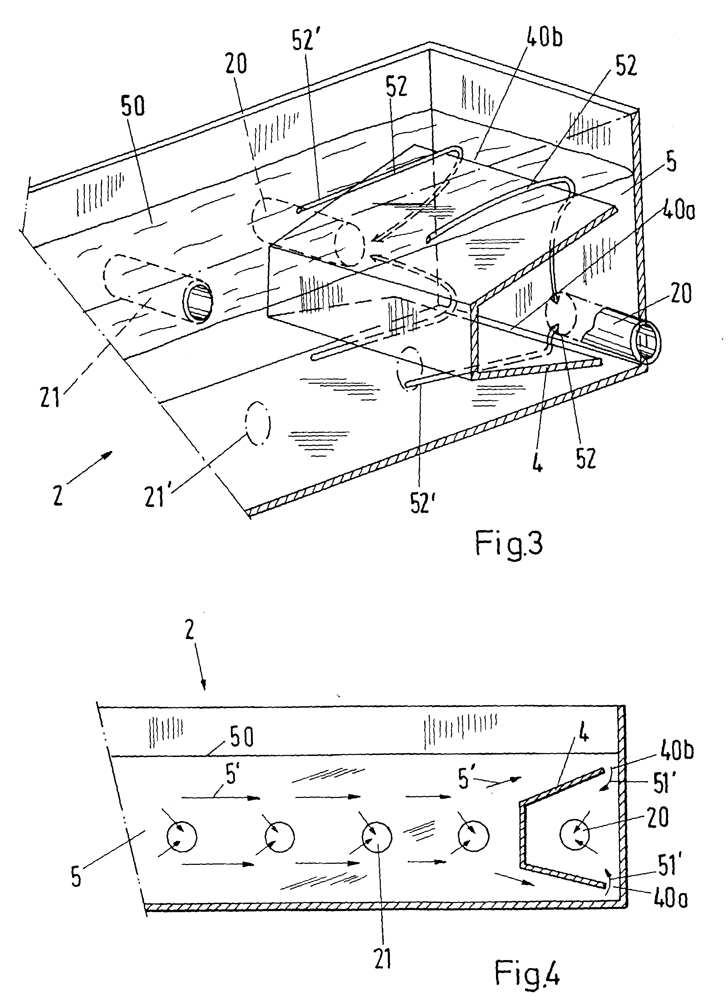

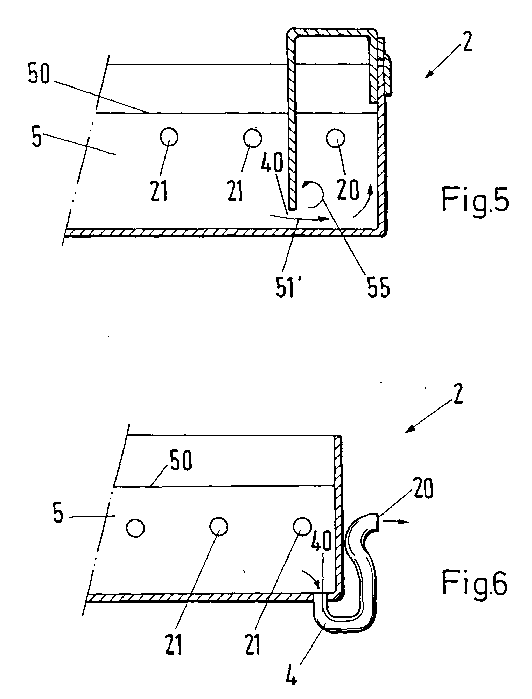

Bei einem zweiten Ausführungsform des Strömungsrichters 4 - siehe Figuren 3 und 4 - sind die Zuströmbereiche der Engpässe 40a und 40b düsenartig ausgebildet. Abströmseitig weisen die Engpässe Abrisskanten auf, durch die sich eine Verwirbelung des abströmenden Mediums ausbildet. Es sind in Fig. 3 Stromfäden 52 (Pfeile 52') eingezeichnet, welche die Bewegung des Mediums 5 im Bereich des Strömungsrichters 4 andeuten, wobei allerdings die Ausbildung von Wirbeln nicht dargestellt ist. Das Medium 5 weist Strömungsgeschwindigkeiten (Pfeile 5') auf, die in Bewegungsrichtung wegen des Abflusses durch die Abgabestellen 20 abnehmen. Die Abgabestellen 20, 21 (auch 21') sind als Röhrchen ausgebildet.

In Fig. 5 ist ein erfindungsgemässes Teilorgan 5 gezeigt, dessen Strömungsrichter 4 als ein Element ausgebildet ist, das in den durch das Teilorgan 5 gebildeten Kanal einschiebbar ist und das sich mit einem Klemmteil 42 befestigen lässt. Das Medium 5 bildet nach Durchtritt durch den Engpass 40 (Pfeil 53) Wirbel 54 aus.

Im Beispiel der Fig. 6 ist der Strömungsrichter 4 rohrförmig und am Teilorgan 2 befestigt. Der Strömungsrichter 4 ist hier selbst als letzte Abgabestelle 20 ausgebildet.

Für den zweistufigen Verteiler 1 der Fig. 1 werden mit Vorteil auch im Vorverteiler 3 Strömungsrichter vorgesehen, mit denen sich ebenfalls stagnierende Strömungsbereiche verhindern lassen. Solche Strömungsrichter werden bei den randständigen Übergangsstellen 23' angeordnet, durch die das zu verteilende Medium in die an letzter Stelle positionierten Teilorgane 2 geleitet wird. Es ist bei jedem mehrstufigen Verteiler vorteilhaft, wenn entsprechend in jeder Stufe Strömungsrichter eingebaut werden.

## Patentansprüche

1. Flüssigkeitsverteiler (1) für Kolonnenpackungen (9) zum Zuführen eines flüssigen Mediums (5), das aus einem Stoff oder einem Stoffgemisch besteht und das zur Ausbildung von Inhomogenitäten neigt, beispielsweise aufgrund einer Entmischung oder einer Polymersation, welcher Verteiler (1) mindestens ein Teilorgan (2) mit einer Reihe von Abgabestellen (20, 21, 22) für das flüssige Medium umfasst, wobei mindestens eine der Abgabestellen (20) bezüglich der Fliessrichtung (5') des Mediums eine letzte Position im Teilorgan einnimmt,
dadurch gekennzeichnet, dass bei der oder den letzten Abgabestellen (20) ein Strömungsrichter (4) im oder am Teilorgan angeordnet ist, durch den ein Durchfluss des Mediums in Bereichen bewirkbar ist, an denen ohne den Strömungsrichter eine Stagnation des Flusses vorläge.

2. Verteiler nach Anspruch 1, dadurch gekennzeichnet, dass der Strömungsrichter (4) an einer tief im Teilorgan (2) angeordneten Stelle einen Engpass (40a) bildet.

3. Verteiler nach Anspruch 1 oder 2, dadurch gekennzeichnet, dass der Strömungsrichter (4) an einer hoch im Teilorgan (2) angeordneten Stelle und im Bereich eines Flüssigkeitsniveaus (50) einen Engpass (40b) bildet.

4. Verteiler nach einem der Ansprüche 1 bis 3, dadurch gekennzeichnet, dass ein Zuströmbereich des Engpasses oder mindestens eines der Engpässe (40a, 40b) düsenartig ausgebildet ist.

5. Verteiler nach einem der Ansprüche 1 bis 4, dadurch gekennzeichnet, dass ein oder der Engpass (40, 40a, 40b) abströmseitig eine Abrisskante aufweist, durch die sich eine Verwirbelung (54) des abströmenden Mediums (5) ausbildet.

6. Verteiler nach einem der Ansprüche 1 bis 5, dadurch gekennzeichnet, dass das Teilorgan (2) ein gegen oben offener Kanal ist und der Strömungsrichter (4) als ein in den Kanal einschiebbares Element ausgebildet ist, wobei das Element mit einem Klemmteil (42) befestigbar ist oder eine Befestigung durch Schweissen, Heften, Kleben, Verschrauben oder eine sonstige Massnahme vorgesehen ist.

7. Verteiler nach einem der Ansprüche 1 bis 6, dadurch gekennzeichnet, dass er mehrstufig ausgebildet ist und dass in einer Stufe (3), die Teilorgane (2) einer folgenden Stufe umfasst, ein Strömungsrichter bei einem an einer letzten Position (23') angeordneten Teilorgan vorgesehen ist, durch den ebenfalls stagnierende Strömungsbereiche verhindert werden.

8. Verteiler nach Anspruch 1, dadurch gekennzeichnet, dass der Strömungsrichter (4) selbst als letzte Abgabestelle (20) ausgebildet ist.

9. Verwendung eines Verteilers (1) gemäss einem der Ansprüche 1 bis 7 zur gleichmässigen Zuführung einer Flüssigkeit (5) auf die Packung (9) einer Kolonne (10), wobei die Flüssigkeit ein Zweiphasengemisch ist, dessen Phasen unterschiedliche Dichten haben, oder wobei die Flüssigkeit ein Stoff oder Stoffgemisch ist, das in Bereichen mit stagnierender Strömung zur Ausbildung von Polymersaten neigt.

10. Verwendung eines Verteilers (1) nach Anspruch 9 in Kolonnen (10) zur Durchführung von Verfahren mit Stoffaustausch, insbesondere von Trenn- oder Extraktionsverfahren.
